# EUROPEAN PATENT APPLICATION

(11) **EP 2 492 801 A2**
(43) Date of publication of application: **29.08.2012**
(21) Application number: 12155217.8
(22) Date of filing: 13.02.2012
(51) Int. Cl.: G06F 3/12

(54) **Customer-specific services for job submission in a print shop architecture**

(30) Priority: 28.02.2011 US 201113036379
(71) Applicant: Ricoh Company, Ltd., Tokyo 143-8555 (JP)
(72) Inventor: Dumitrescu, Tiberiu, Cupertino CA 95014 (US); Raines, Michael, Cupertino CA 95014 (US)
(74) Representative: Maury, Richard Philip

(57) **Abstract**

Methods and systems are disclosed provide for filtering print shop services that are available to a customer based on rules for the customer. In one embodiment, a system identifies services that are available from a print shop, and filters the available services based on rules for a customer to identify a subset of available services. The system displays the subset of available services to the customer as options for the customer to select for a print job. The system receives a selection from the customer of one or more of the options from the subset of available services. The system then generates a job ticket for a print job based on the selection from the customer, and transmits the job ticket to the print shop.

## Description

### FIELD OF THE INVENTION

The invention relates to the field of printing systems and, in particular, to filtering services that are available to a customer when generating jobs for a print shop based on rules for the customer.

### BACKGROUND OF THE INVENTION

Print shops are typically medium or large scale facilities capable of supplying printing services to meet a variety of customer demands. For example, print shops are often used to print documents used for mass-mailing (e.g., customer bills, advertisements, etc). Because print shops engage in printing on a scale that is hard to match, their customer base is usually varied. Print shop clients may therefore include both large institutional clients (e.g., credit card companies and banks), and small clients (e.g., small businesses and churches).

Print shops are generally arranged to print incoming jobs from clients in a way that is economical, yet fast. Thus, print shops often include a number of high-volume printers capable of printing incoming jobs quickly and at high quality. These printers may be managed by operators who can remove paper jams and reload the printers with media. Print shops also typically include post-print devices that are used to process the printed documents of each job (e.g., stackers, staplers, cutters, binders, etc.). Because print shops serve a variety of clients, they are often tasked with printing jobs that have varying printing formats, delivery dates, and media requirements. Print shops therefore often use a centralized print server that coordinates activity between printers of the print shop and clients. The print server schedules incoming jobs and forwards them to the printers they are directed to.

Customers with printing needs generate print jobs for the print shop using a variety of tools, such as web interfaces to the print shop, client side tools operated by the customer, etc. When a customer generates a job for the print shop, options for the job are selected by the customer and integrated into the print job (e.g., a job ticket for the customer's print data indicates duplexing, media types, etc.) based on the capabilities and services that the print shop offers to customers. Often, a wide variety of services are available from the print shop. This may present confusion to less sophisticated customers that do not necessarily need or understand the services that are available from the print shop. This makes creating jobs for the print shop more complicated for the customer.

### SUMMARY OF THE INVENTION

Embodiments described herein filter the print shop services that are available to a customer based on rules for the customer. Generally, a print shop provides services and options for the services to customers when creating a print job for the print shop. The multitude of services and options may generate confusion in less sophisticated customers. In the embodiments described, services that are available to customers of the print shop are filtered based on rules for the customer. Using rules, a customer may be presented with more services and options in cases where the customer is more sophisticated and fewer services and options in cases where the customer is less sophisticated. This makes creating jobs for the print shop less complicated.

In one embodiment, a system includes a control system and a graphical user interface. The control system identifies services that are available from a print shop, and filters the available services based on rules for a customer to identify a subset of available services. The graphical user interface displays the subset of available services to the customer as options for the customer to select for a print job. The graphical user interface receives a selection from the customer of one or more of the options from the subset of available services. The control system then generates a job ticket for a print job based on the selection from the customer, and transmits the job ticket to the print shop.

Other exemplary embodiments may be described below.

### BRIEF DESCRIPTION OF THE DRAWINGS

Some embodiments of the present invention are now described, by way of example only, and with reference to the accompanying drawings. The same reference number represents the same element or the same type of element on all drawings.
FIG. 1 is a block diagram illustrating a print shop architecture in an exemplary embodiment.
FIG. 2 is a block diagram illustrating additional details for a client of the architecture of FIG. 1 in an exemplary embodiment.
FIG. 3 is a flow chart illustrating a method of filtering the print shop services provided to a customer in an exemplary embodiment.
FIGS. 4-5 are block diagrams illustrating an example of how a graphical user interface may display services to different customers in an exemplary embodiment.
FIG. 6 is a block diagram illustrating a computer system operable to execute computer readable medium embodying programmed instructions to perform desired functions in an exemplary embodiment.

### DETAILED DESCRIPTION OF THE PRESENT INVENTION

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

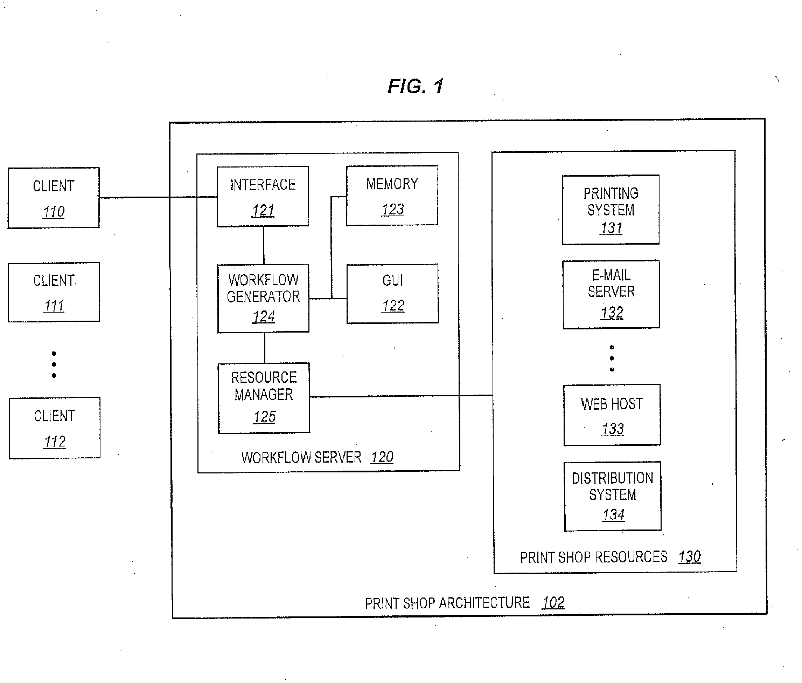

FIG. 1 is a block diagram illustrating a print shop architecture 102 in an exemplary embodiment. Print shop architecture 102 includes workflow server 120, which functionally connects one or more clients 110-112 to print shop resources 130. Clients 110-112 may be servers or software applications used by print shop customers. Clients 110-112 submit print data and job tickets that describe how the print data will be processed to interface 121. Workflow server 120 generates custom workflows for incoming print jobs, and manages print shop resources 130 in accordance with these workflows. The custom workflows are generated based on rules defined for the customer, a job ticket of the print job, and activities available at the print shop.

Clients 110-112 may serve banks, credit card companies, or other customers having printing and document delivery needs (e.g., monthly bank statements, monthly credit card bills, etc.). Clients 110-112 may also serve customers with digital printing and publishing needs (e.g., needs for e-mail services, web publishing services, and others). Information describing the services requested by the customer may be included in job tickets sent by clients 110-112.

Print shop resources 130 include the devices and components of the print shop that are used to perform print shop activities. For example, print shop resources 130 may include personnel, printers, post-printing machinery, e-mail or web publishing servers, media, ink, firmware versions for print shop devices, and others. Print shop resources 130 may exist within the confines of the print shop itself, or may comprise off-site devices and functional components managed by workflow server 120. The print shop resources 131-134 illustrated in FIG. 1 are merely meant to provide an example of the variety of print shop resources 130 that may be provided. For example, print shop resources 130 may include printing system 131 for transforming print data onto a suitable printable medium, such as paper. Other resources may include e-mail server 132 for generating e-mails, web host 133 for generating and hosting web pages or other internet content, and distribution system 134 for packaging and shipping printed documents.

While in operation, workflow server 120 identifies available activities that may be performed by print shop resources 130. Workflow server 120 may determine available print shop activities based upon the nature of print shop resources 130. For example, when print shop resources 130 include e-mail server 132, available activities may include generating e-mails, scheduling times to send e-mails, and selecting e-mail recipients. Activities may be associated with a category or type of resource (e.g., personnel, printers, servers) and may also be associated with specific named print shop resources (e.g., Susan, printing system 131, e-mail server 132).

Innumerable print shop activities may be defined, and certain print shop activities may be logically related with each other so that they have order and dependency relationships (e.g., a post-printing activity such as hole punching may depend upon the print data being successfully printed). A print shop operator may prioritize activities (e.g., to ensure that billing is the last activity performed), and may make certain activities required (e.g., billing may be required for every print job that enters the system). Furthermore, certain activities may be required, altered, or made optional based upon specific clients, customers, or information in a job ticket of the print job (e.g., customer service requests, multimedia parameters, size of the print data, format of the print data, etc.). For example, thank-you letters may be sent to high value or long-term customers, while credit checks may be performed upon new customers. The logical relationships of print shop activities are hereinafter referred to as "print shop rules" or "rules." In addition to printing activities, rules may regulate non-printing activities (e.g., billing, shipping, document review, multimedia/digital/internet activities, credit checks, etc.). In order to aid an operator of the print shop in managing rules and activities, a Graphical User Interface (GUI) 122 is provided for generation and manipulation of activities and rules. Workflow server 120 stores rules for the print shop in memory 123.

Once rules and activities have been defined, workflow generator 124 is operable to generate a workflow for a print job of a customer. Workflow generator 124 generates the workflow based on information in a job ticket of the print job (e.g., customer service requests for printing or multimedia activities, the size of a print job, etc.) and the rules for the customer. The available activities are dynamically scheduled into the customized workflow to define an ordered set of activities to perform (including, for example, activities that run in parallel).

Resource manager 125 of workflow server 120 analyzes the generated workflow and directs print shop resources 130 to perform the activities defined by the workflow for a given print job. In one embodiment, resource manager 125 identifies activities that relate to specific print shop resources 131-134 (e.g., the activity "e-mail the client a printing status report" may relate to e-mail server 132), and instructs the specific resources to perform the identified activities. Resource manager 125 may further receive feedback from print shop resources 130 (e.g., information indicating that an activity has successfully completed).

Thus, while in operation, workflow server 120 receives and processes incoming print jobs from clients 110-112. Workflow server 120 determines the customer's service requests, and dynamically generates (i.e., "from scratch") a workflow of activities to perform in order to achieve the requested services for the customer while complying with the rules of the print shop. These dynamically generated workflows are customized to each incoming job. Workflow server 120 then initiates processing of the workflow for each job.

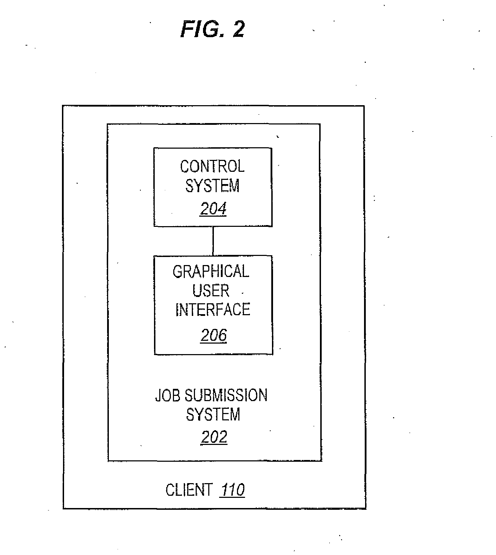

FIG. 2 is a block diagram illustrating additional details for client 110 of FIG. 1 in an exemplary embodiment. Client 110 includes a job submission system 202 that communicates with workflow server 120 to allow customers to submit jobs to architecture 102. Generally, system 202 identifies what services are available at architecture 102, and filters the services based on rules for customers. For example, while architecture 102 may have 250 different printing options available for a printing service, a rule for a specific customer may indicate that only 35 options are available to the customer when creating jobs for architecture 102. This makes creating jobs for architecture 102 easier for the customer.

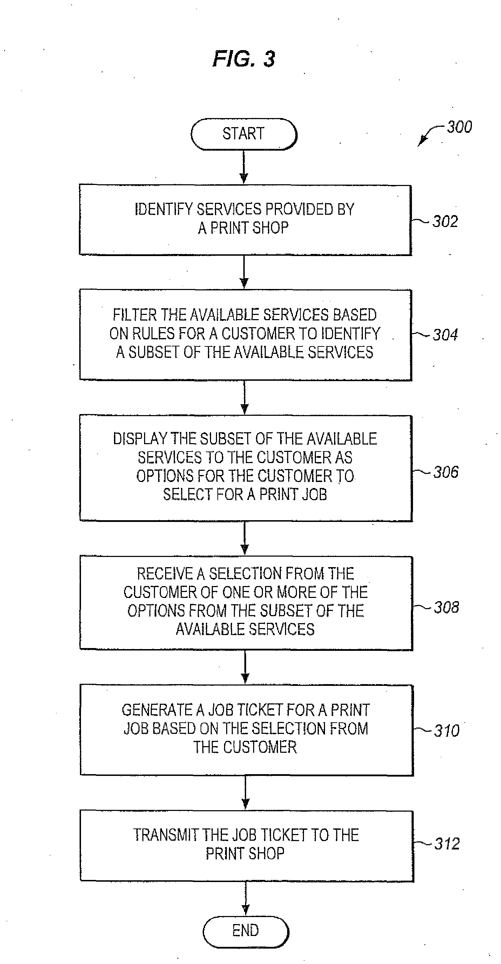

System 202 in this embodiment includes a control system 204 and a graphical user interface 206 (GUI). These elements of system 202 will be discussed in more detail with regard to FIG. 3.

FIG. 3 is a flow chart illustrating a method 300 of filtering print shop services that are available to a customer for generating jobs in an exemplary embodiment. The steps of method 300 will be described with respect to system 202 of FIG. 2, although one skilled in the art will understand that method 300 may be performed by other systems not shown. The steps of the methods described herein are not all inclusive and may include other steps not shown. The steps for the methods described herein may also be performed in an alternative order.

In step 302, control system 204 (see FIG. 2) identifies the services that are available from architecture 102. Generally, architecture 102 may provide services to customers based on resources 130. Some of the services may be printing services based on printing system 131, email services based on email server 132, web publishing services based on web host 133, and shipping services based on distribution system 134. One skilled in the art will understand that architecture 102 may provide customers with any number of services, and that the specific services discussed herein are for illustrative purposes. When identifying the services, control system 204 may query architecture 102 for information about what services are available from architecture 102.

In step 304, control system 204 filters the services available from architecture 102 based on rules for a customer to identify a subset of the available services. The rules used to filter the services may be based on a particular installation of software utilized by the customer when generating jobs for architecture 102, a particular department of a business (e.g., the legal department, the marketing department, human resources, etc.), a particular employee, etc. The rules may indicate the specific media types that are available to the customer, the specific types of post-print activities that are available to a customer, the specific non-printing services (e.g., web hosting, emailing, multi-media creation, etc.) that are available to a customer, etc. The rules are flexible and therefore, may include information about a particular customer, a particular subset of options within a service (e.g., binding options available as part of a printing service), etc. The rules may be statically defined for a particular installation of software and hardware at client 110, and/or the rules may be periodically updated to allow changes to the rules over time. In some embodiments, the rules are stored as pre-configured templates for the customer. Also, control system 204 may query architecture 102 for the rules or query some other system not shown for the rules. In some embodiments, system 202 receives updated rules for customers from architecture 102. The updated rulers may be received in a number of different formats, such as email, pre-configured templates, and XML files. Updating the rules allows architecture 102 (or some other entity) to modify rules for customers as desired. For example, a print shop operator for architecture 102 may desire to add or remove options that are available to a particular customer, a particular group of customers, etc., as capabilities or conditions at architecture 102 changes over time. For example, equipment at architecture 102 may be brought online or offline, which may result in a new rule or rules for customers being generated and/or transmitted to system 202. This allows jobs generated for architecture 102 to more accurately coincide with the capabilities and the conditions at architecture 102.

When control system 204 filters the services, some services may be removed for selection by the customer all together, or parsed out to exclude some options within the services. For example, a printing service offered by architecture 102 may include duplexing, binding, stapling, and folding. A rule for a customer may indicate that binding and folding is not available as job options when building a job for architecture 102. Also, the options for a customer may be pre-selected for the customer. In this case, the rules may define services or options of services which are pre-selected for the customer, and that are not un-selectable by the customer when creating a job for architecture 102. In addition, the rules may define services and options of services that are not presented to the customer, but are added to a job ticket for the customer. For example, pre-flight. The rules for the customer may define that job tickets will include pre-flight regardless of the services or options selected by the customer. The customer may not know or care whether the options pre-selected for the customer are performed or not. Instead, the pre-selected options may be added to a ticket created for the customer and not presented to the customer as an option in a user interface.

In step 306, GUI 206 displays the subset of the services identified for the customer as options for the customer to select for the print job. GUI 206 may display the services as text, graphical objects, or any combination thereof. GUI 206 may be part of an application program for submitting jobs to architecture 102, and therefore may use a typical workstation to display the subset of services that are available to the customer.

In step 308, GUI 206 receives a selection from the customer for one or more options from the subset of available services. GUI 206 may include a mouse, a touchscreen, or other input device that allows a customer to select the options that are displayed.

In step 310, control system 204 generates a job ticket for a print job based on the options selected by the customer. When generating the job ticket, control system 204 may first identify a format of job tickets for architecture 102, and then generate the ticket based on the format. Architecture 102 may use a specific format for job tickets, a specific standard for job tickets, etc., and therefore, may expect or desire that job tickets be in the format. For example, if the format identified for job tickets at architecture 102 is JDF or a subset of JDF, then control system 204 may generate the job ticket in JDF or the subset of JDF.

In step 312, control system 204 transmits the job ticket to architecture 102. Architecture 102 may then process the job ticket to perform the services requested by the customer in the job ticket. By filtering the services that are available from architecture 102 based on rules for the customer, system 202 has more control over what kind of service (and job options for the services) are presented to a customer when creating jobs for architecture 102.

### Example

In the example, a customer wants architecture 102 to print a marketing brochure, and to send out an email to a list of people in the marketing department informing them that a new brochure is being produced. System 202 (see FIG. 2) may query architecture 102 to identify the services that are available from architecture 102. In the example, architecture 102 offers printing services, shipping services, email services, and web publishing services. System 202 then filters the services based on rules for the customer to identify a subset of the services that are available to the customer. The customer may have logged in to an account or provided some other type of identification that allows system 202 to locate rules associated with the customer. In the example, the rules indicate that binding and stapling print options of a print service are not available to this customer when generating a job for architecture 102. The web publishing service is also not available. Further, the rules in the example indicate that each job submitted by the customer will include a pre-flight. When pre-flight is selected, a print operator will verify that the job submitted to architecture 102 is complete and ready to process prior to releasing the job to production. Some examples of the pre-selected options that may be defined in the rules include automatic holds placed on jobs, credit checks performed on the customer, proof sheet printing prior to releasing jobs to print, etc. After system 202 identifies the subset of services that are available to the customer, GUI 206 displays the subset of the available services to the customer as options to use when generating a print job.

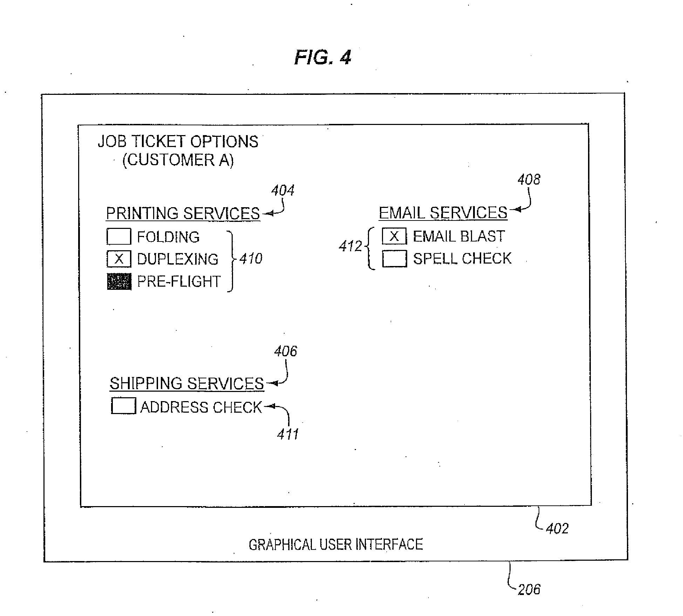

FIGS. 4-5 are block diagram illustrating examples of how GUI 206 may display the subset of services to different customers in an exemplary embodiment. In the example shown in FIG. 4, GUI 206 displays a subset of services that may be available for customer A based on the rules for customer A. More particularly, customer A has a number of services available, such as printing services 404, shipping services 406, and email services 408 when generating a job for architecture 102. Although a publishing service capability is available from architecture 102, the publishing service is not available to customer A based on the rules for customer, and therefore, is not shown in FIG. 4. Further, some of the options 410 of printing service 406 are not available for the customer based on the rules for the customer. Options 410 that are not available include binding and stapling. Options 410 that are available to customer A include folding and duplexing.

In addition, GUI 206 of FIG. 4 illustrates some options 410-412 that are pre-selected for customer A based on the rules for customer A. A pre-selected option for the customer in the example is a pre-flighting option. A pre-selected option for the customer may not always be visible to the customer. For example, although pre-flight is shown as already selected for the customer in FIG. 4, a pre-selected option may also be included in a job ticket for the customer without displaying this information to the user. Instead, the pre-selected option(s) would be added to the job ticket, and the customer may not even be aware that the options(s) are included in the job ticket.

Using GUI 206, the customer selects one or more of the services 404, 406, and 408 (and the options 410-412 for services 404, 406, and 408) that customer A wants to use in this job. In the example, the customer selects duplexing from options 410 from printing services 404 and an email blast from options 412 for email services 408. This is indicated in window 402 as checked boxes. After the customer selects the desired services, the customer may proceed on to subsequent steps for generating a job for architecture 102. When email services 408 are selected, such as an email blast, the customer may be asked to upload a file that includes the email addresses of the recipients of the email. System 202 will generate a job ticket for architecture 102 based on the customers' selections and information, and transmit the ticket (and any other associated information for the job such as print data, email lists, etc.) to architecture 102 for processing.

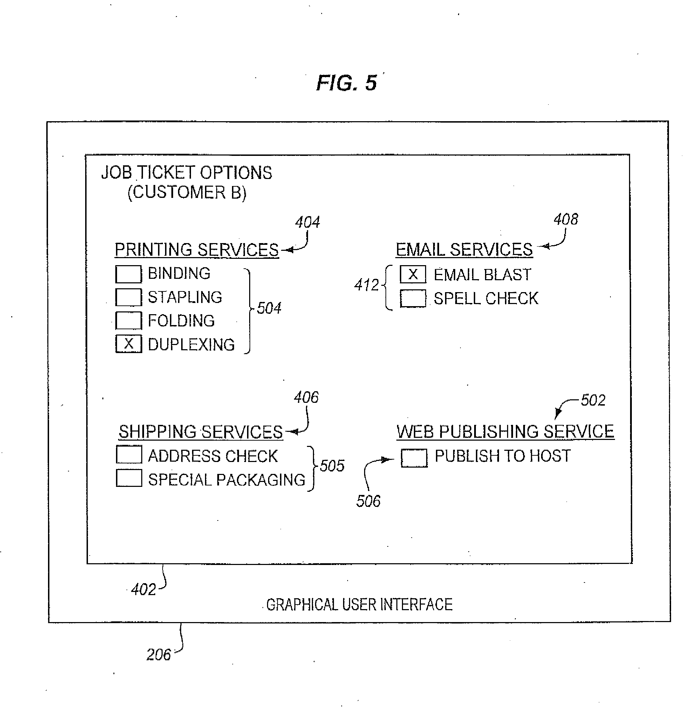

In the example shown for FIG. 5, GUI 206 displays a subset of services that may be available for customer B based on the rules for customer B. In FIG. 5, customer B has different options 504-506 than customer A. Also, customer B has an additional web publishing service 502, and options 506 that include publishing to a host. Some of the additional options 504 shown for customer B include binding and stapling. An additional shipping service 406 available to customer B includes special packaging under options 505. Also, FIG. 5 does not display the pre-selected option of pre-flight to the customer in this example, although pre-flight is included in a job ticket generated for the customer. In some cases, a pre-selected option may not be displayed to the customer (e.g., pre-flight) as illustrated in FIG. 5. After the customer selects the options for the example job, a job ticket is generated. The job ticket includes the pre-selected options for the customer, and may also include additional information related to the customer and embedded into the job ticket, such as contact information, shipping information (addresses, account numbers and carriers, etc.), approval information, etc.

Filtering options and services that are available to customers allows more sophisticated customers a wide variety of options, and less sophisticated customers fewer options. This provides the more sophisticated customers the options they may need for complicated jobs, while preventing less sophisticated customers from becoming confused by options they may never need or use.

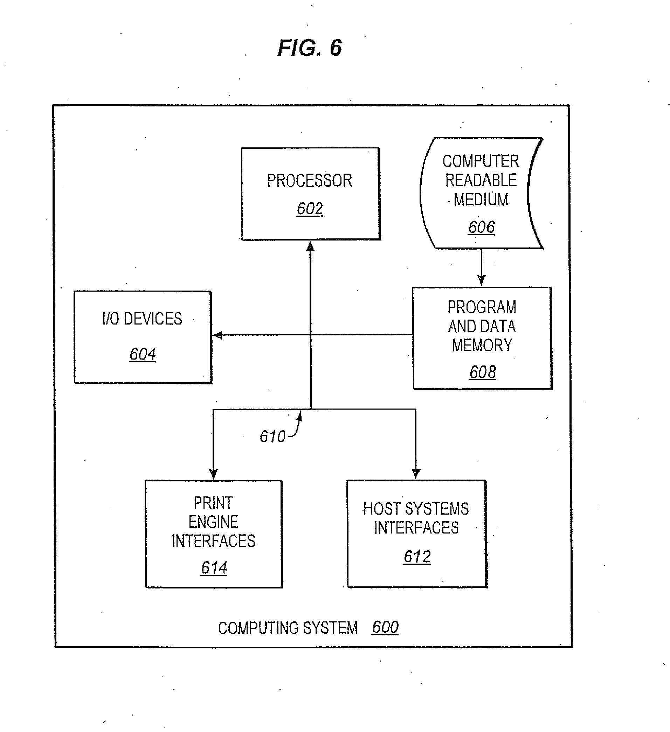

The invention can take the form of an entirely hardware embodiment, an entirely software embodiment or an embodiment containing both hardware and software elements. In one embodiment, the invention is implemented in software, which includes but is not limited to firmware, resident software, microcode, etc. FIG. 6 illustrates a computing system 600 in which a computer readable medium 606 may provide instructions for performing method 300 in an exemplary embodiment.

Furthermore, the invention can take the form of a computer program product accessible from a computer-usable or computer-readable medium 606 providing program code for use by or in connection with a computer or any instruction execution system. For the purposes of this description, a computer-usable or computer readable medium 606 can be any apparatus that can contain, store, communicate, propagate, or transport the program for use by or in connection with the instruction execution system, apparatus, or device.

The medium 606 can be an electronic, magnetic, optical, electromagnetic, infrared, or semiconductor system (or apparatus or device) or a propagation medium. Examples of a computer-readable medium 606 include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD.

A data processing system suitable for storing and/or executing program code includes at least one processor 602 coupled directly or indirectly to memory 608 through a system bus 610. The memory 608 can include local memory employed during actual execution of the program code, bulk storage, and cache memories which provide temporary storage of at least some program code in order to reduce the number of times code is retrieved from bulk storage during execution.

Input/output or I/O devices 604 (including but not limited to keyboards, displays, pointing devices, etc.) can be coupled to the system either directly or through intervening I/O controllers.

Network adapters may also be coupled to the system to enable the data processing system to become coupled to other data processing systems, such a through host systems interfaces 612, or remote printers or storage devices through intervening private or public networks, such as through print engine interfaces 614. Modems, cable modem and Ethernet cards are just a few of the currently available types of network adapters.

Although specific embodiments were described herein, the scope of the invention is not limited to those specific embodiments. The scope of the invention is defined by the following claims and any equivalents thereof.

The present application is based on U.S. Patent Application No. 13/036,379 filed on February 28, 2011.

## Claims

1. A system (202) comprising:
a control system (204) operable to identify services that are available from a print shop, and to filter the available services based on rules for a customer to identify a subset of the available services; and
a graphical user interface (206) operable to display the subset of the available services to the customer as options for the customer to select for a print job, and to receive a selection from the customer of at least one of the options from the subset of the available services,
**characterized in that** the control system is further operable to generate a job ticket for the print job based on the selection by the customer, and to transmit the job ticket to the print shop.

2. The system of claim 1 wherein:
the control system is further operable to receive updated rules for the customer from the print shop as at least one of an email, a pre-configured template, and an Extensible Markup Language (XML) file.

3. The system of claim 1 wherein:
the control system is further operable to query the print shop for the rules for the customer.

4. The system of claim 1 wherein:
the control system is further operable to identify a format of job tickets for the print shop, and to generate the job ticket in the identified format.

5. The system of claim 4 wherein the format of job tickets for the print shop is Job Definition Format (JDF).

6. The system of claim 1 wherein:
the control system is further operable to identify at least one option for the customer that is pre-selected for the customer, and to generate the job ticket based on the at least one pre-selected option.

7. A method comprising:
identifying services that are available from a print shop;
filtering the available services based on rules for a customer to identify a subset of the available services;
displaying the subset of the available services to the customer as options for the customer to select for a print job;
receiving a selection from the customer of at least one of the options from the subset of the available services;
generating a job ticket for the print job based on the selection by the customer; and
transmitting the job ticket to the print shop.

8. The method of claim 7 further comprising:
receiving updated rules for the customer from the print shop as at least one of an email, a pre-configured template, and an Extensible Markup Language (XML) file.

9. The method of claim 7 further comprising:
querying the print shop for the rules for the customer.

10. The method of claim 7 further comprising:
identifying a format of job tickets for the print shop,
wherein generating the job ticket further comprises: generating the job ticket in the identified format.

11. The method of claim 7 wherein the format of the job tickets for the print shop is Job Definition Formal (JDF).

12. The method of claim 7 further comprising:
identifying at least one option for the customer that is pre-selected for the customer,
wherein generating the job ticket further comprises:
generating the job ticket based on the at least one pre-selected option.

13. A tangible computer readable medium embodying programmed instructions which, when executed by a processor, are operable for performing a method of filtering print shop services that are available to a customer based on rules for the customer, the method comprising:
identifying services that are available from a print shop;
filtering the available services based on rules for a customer to identify a subset of the available services;
displaying the subset of the available services to the customer as options for the customer to select for a print job;
receiving a selection from the customer of at least one of the options from the subset of the available services;
generating a job ticket for the print job based on the selection by the customer; and
transmitting the job ticket to the print shop.

14. The medium of claim 13 wherein the method further comprises:
identifying a format of job tickets for the print shop,
wherein generating the job ticket further comprises:
generating the job ticket in the identified format.

15. The medium of claim 13 wherein the method further comprises:
identifying at least one option for the customer that is pre-selected for the customer,
wherein generating the job ticket further comprises:
generating the job ticket based on the at least one pre-selected option.
